# FASCICULE DE BREVET EUROPEEN

(11) **EP 1 991 452 B1**
(45) Date de publication et mention de la délivrance du brevet: **28.07.2010**
(21) Numéro de dépôt: 07731646.1
(22) Date de dépôt: 20.02.2007
(51) Int. Cl.: B60T 13/68

(54) **DISPOSITIF DE COMMANDE DU FREINAGE HYDRAULIQUE D'UNE REMORQUE ATTELEE A UN TRACTEUR**
SYSTEM ZUR STEUERUNG DER HYDRAULISCHEN BREMSUNG EINES AN EINEM SCHLEPPER ANGEHÄNGTEN ANHÄNGERS
SYSTEM FOR CONTROLLING THE HYDRAULIC BRAKING OF A TRAILER HITCHED TO A TRACTOR

(30) Priorité: 22.02.2006 FR 0650606
(43) Date de publication de la demande: 19.11.2008
(73) Titulaire: POCLAIN HYDRAULICS INDUSTRIE, 60411 Verberie (FR)
(72) Inventeur: HEREN, Jean, 60280 MARGNY LES COMPIEGNE (FR); PRIGENT, André, F-60410 Saintines (FR); RAISIN, Jean-Philippe, F-60270 Gouvieux (FR)
(74) Mandataire: Intes, Didier Gérard André
(86) Numéro de dépôt international: PCT/FR2007/050825
(87) Numéro de publication internationale: WO 2007/096561

(56) Documents cités:
- FR-A3- 2 661 381
- US-A1- 2002 180 257

## Description

La présente invention concerne un dispositif de commande du freinage hydraulique d'une remorque attelée à un tracteur, comprenant un circuit hydraulique ayant une conduite de frein apte à être reliée à une source de fluide sous pression ou à un réservoir sans surpression par l'intermédiaire d'un réducteur de pression proportionnel commandé par des moyens de commande comprenant une unité de commande électronique.

US 2002/0180257 et FR 2 661 381 divulguent des dispositifs de ce type.

Un tel dispositif peut servir au freinage de remorques de différents types, notamment de remorques agricoles. Il existe en effet des remorques de type italien, dans lesquelles le frein peut être activé en situation de parking (c'est-à-dire au repos) par manque de pression dans une chambre de commande hydraulique, tandis qu'il est désactivé pour permettre la circulation de la remorque lorsqu'une pression moyenne (par exemple entre 8 et 15 bars) est entretenue dans cette chambre, et qu'il est réactivé pour un freinage de service (c'est-à-dire lorsque la remorque circule), lorsque la pression atteint une valeur nettement supérieure (en particulier entre 15 et 140 bars). Le freinage de parking réalise également un freinage de secours, qui est activé naturellement lorsqu'un incident survient.

Il existe également des remorques de type français, comprenant uniquement un freinage de service, qui est commandé par une augmentation de la pression dans une chambre de commande hydraulique. En variante, certaines remorques de type français sont équipées d'un dispositif à accumulation d'énergie pour permettre un freinage de secours en alimentant la chambre de commande.

Les dispositifs de commande du freinage de ce type sont soumis à des exigences contradictoires. D'une part, ils doivent permettre d'augmenter rapidement la pression dans la conduite de frein, pour obtenir un freinage intense lorsque cela est nécessaire. Ceci impose que le réducteur de pression proportionnel soit dimensionné de manière à permettre le passage d'un débit de fluide important, en peu de temps.

D'autre part, il est nécessaire de régler finement la pression dans la conduite de freinage pour, dans le cas d'une remorque de type italien, faire régner dans cette conduite de frein une pression entre 8 à 15 bars nécessaire à la circulation non freinée de la remorque et pour, éviter un engagement, même partiel, des freins, qui pourrait les détériorer.

La présente invention a pour but de proposer un dispositif amélioré et simple, qui permette de remplir ces deux exigences contradictoires.

Ce but est atteint grâce au fait que le circuit comprend des moyens d'électrovalve de liaison aptes à relier le réducteur de pression proportionnel au réservoir ou, par l'intermédiaire d'un réducteur de pression taré, à la source de fluide sous pression.

En particulier, le réducteur de pression taré est réglé pour une pression à l'intérieur de la plage de 8 à 15 bars, par exemple 10 à 13 bars, permettant de garantir le défreinage du système de frein d'une remorque de type italien. Dans ce cas, pour réaliser ce défreinage, le réducteur de pression proportionnel est relié, non pas directement au réservoir, mais au réducteur de pression taré. C'est alors la commande de ce réducteur de pression taré, c'est-à-dire son raccordement à la source de fluide sous pression ou au réservoir qui permet d'obtenir, dans la conduite de frein, la pression souhaitée.

Lorsqu'un freinage important est nécessaire, les moyens d'électrovalve de liaison relient le réducteur de pression proportionnel au réservoir et c'est la commande de ce réducteur de pression proportionnel, entre la source de fluide sous pression à laquelle il est par ailleurs relié et cette liaison au réservoir, qui permet de faire régner la pression souhaitée dans la conduite de frein.

Avantageusement, un limiteur de pression est disposé sur une liaison entre le réducteur de pression taré et les moyens d'électrovalve de liaison.

Ce limiteur de pression permet d'écrêter la pression en sortie du réducteur de pression taré, pour encore fiabiliser l'obtention de la pression souhaitée (par exemple entre 8 et 15 bars) dans la conduite de frein.

Selon un mode de réalisation avantageux, le réducteur de pression proportionnel est une électrovalve, commandée par l'unité de commande électronique.

Selon un autre mode de réalisation avantageux, le réducteur de pression proportionnel est une valve à commande hydraulique, comprenant une chambre de commande apte à être reliée à une alimentation en fluide de commande par l'intermédiaire d'une électrovalve pilote proportionnelle, elle-même commandée par l'unité de commande électronique.

Dans ce cas, la commande du réducteur de pression proportionnel par l'unité de commande électronique est indirecte, cette unité commandant l'électrovalve pilote, qui commande elle-même le réducteur de pression proportionnel par une alimentation appropriée de sa chambre de commande.

Selon le type de remorque, le freinage de secours est obtenu en vidangeant la chambre de commande hydraulique du frein (remorque de type italien), ou bien au contraire en alimentant cette chambre de commande à une pression suffisante (remorque de type français).

Avec les dispositifs existants, une adaptation spécifique est nécessaire lorsque l'on souhaite atteler au tracteur une remorque de l'un ou l'autre des types indiqués ci-dessus, et obtenir un freinage de secours. Ces opérations d'adaptation s'avèrent fastidieuses et coûteuses, et elles nuisent à la souplesse d'utilisation du tracteur.

Selon une variante de réalisation particulièrement avantageuse, l'invention permet l'obtention d'un tel freinage de secours, sans adaptation particulière. Notamment, aucune adaptation de la remorque n'est nécessaire, l'ensemble des éléments du dispositif étant prévu sur le tracteur.

Avantageusement, le circuit comprend un sélecteur hydraulique de freinage apte, dans une position de liaison dans laquelle l'entrée et la sortie du sélecteur de freinage sont reliées, à provoquer le raccordement d'une conduite de liaison avec une alimentation en fluide ou avec une enceinte sans surpression, et des moyens d'électrovalve de commande de ce sélecteur de freinage commandés par l'unité de commande électronique, les moyens d'électrovalve de commande du sélecteur de freinage étant aptes à adopter une première configuration de travail dans laquelle ils permettent l'alimentation en fluide d'une première chambre de commande du sélecteur de freinage pour commander ce dernier dans une position d'isolement dans laquelle l'entrée et la sortie du sélecteur de freinage sont isolées par le sélecteur de freinage, une deuxième configuration de travail dans laquelle ils permettent l'alimentation en fluide d'une deuxième chambre de commande du sélecteur de freinage pour commander ce dernier dans ladite position de liaison, et une configuration neutre dans laquelle aucune des deux chambres de commande du sélecteur de freinage n'est alimentée en fluide et dans laquelle l'entrée du sélecteur de freinage est reliée à l'alimentation en fluide ; le dispositif comprend des moyens pour maintenir le sélecteur de freinage en position lorsque les moyens d'électrovalve de commande passent de leur première ou de leur deuxième configuration de travail à leur configuration neutre ; la conduite de liaison est reliée à des moyens de valve de liaison eux-mêmes reliés à la conduite de frein de manière à permettre l'alimentation en fluide de cette conduite de frein ou sa liaison au réservoir selon que la conduite de liaison est reliée à l'alimentation en fluide ou à l'enceinte sans surpression ; et le dispositif comprend des moyens pour fournir à l'unité de commande électronique une information indiquant si le frein de la remorque est d'un premier type nécessitant un défreinage par une alimentation en fluide ou d'un deuxième type, l'unité de commande prenant cette information en compte pour la commande des moyens d'électrovalve de commande du sélecteur de freinage.

Avantageusement, les moyens de valve de liaison comprennent le réducteur de pression proportionnel à commande hydraulique et la conduite de liaison est reliée à une conduite de pilotage dudit réducteur de pression.

Dans ce cas, pour un freinage de secours d'une remorque de type français, le fluide provenant de la conduite de liaison sollicite le réducteur de pression proportionnel afin que ce dernier permette le raccordement de la conduite de frein à la source de fluide. Pour un freinage de secours d'une remorque de type italien, la conduite de liaison n'est pas alimentée en fluide pour que le réducteur de pression proportionnel permette la liaison de la conduite de frein avec le réservoir.

Il serait également possible d'envisager que la conduite de liaison soit reliée à la conduite de frein par des moyens de sélection de la plus haute pression entre la sortie du réducteur proportionnel et la conduite de liaison, pour alimenter directement la conduite de frein lors d'un freinage de secours d'une remorque de type français ou permettre la liaison de cette conduite avec le réservoir pour un freinage de secours d'une remorque de type italien.

Par exemple, les moyens d'électrovalve de commande comprennent deux électrovalves à deux positions ou une électrovalve susceptible d'occuper trois positions.

L'invention sera bien comprise et ses avantages apparaîtront mieux à la lecture de la description détaillée qui suit, de modes de réalisation représentés à titre d'exemples non limitatifs. La description se réfère aux dessins annexés sur lesquels :
la figure 1 montre schématiquement un dispositif conforme à l'invention, selon un premier mode de réalisation ;
- les figures 2 et 3 sont des vues analogues à celles de la figure 1, pour d'autres modes de réalisation ; et
- les figures 4 et 5 montrent la conformation d'un sélecteur hydraulique de freinage pouvant faire partie du dispositif de l'invention, dans deux positions de ce sélecteur.

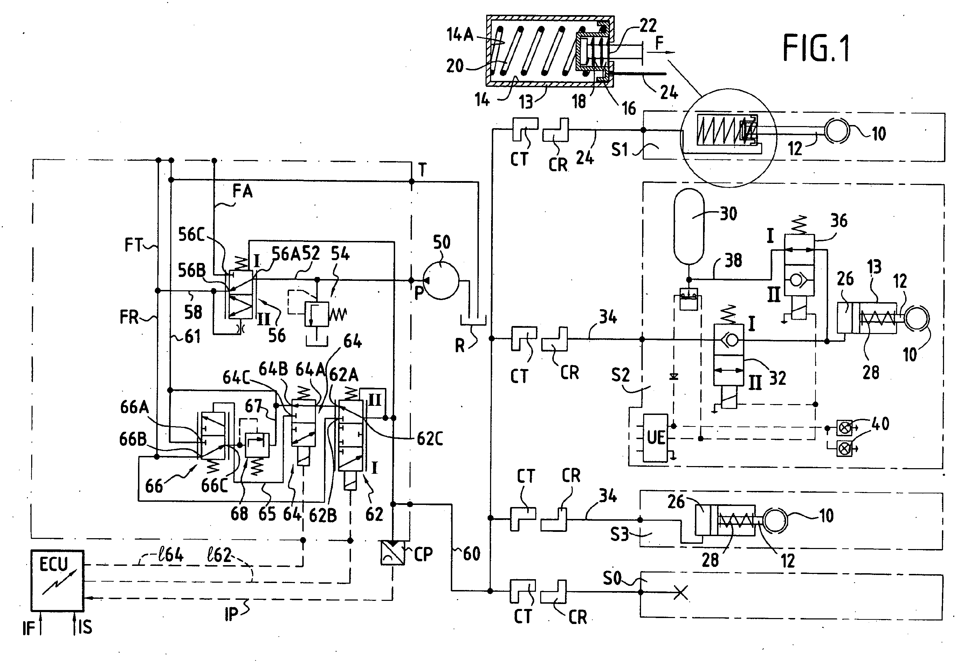

On décrit tout d'abord la partie droite de la figure 1 qui illustre trois exemples possibles de systèmes de freinage de remorque S1, S2, S3 et montre une situation S0 dans laquelle aucune remorque n'est attelée au tracteur.

Le système S1 est de type italien. Il comprend des organes de freinage mécanique, par exemple des garnitures de frein 10 qui doivent être écartés contre la périphérique interne d'un moyeu pour assurer le freinage. Ils sont commandés par un système de vérin hydraulique comprenant un piston 12 mobile dans un cylindre 13, et une commande hydraulique qui, comme on le voit mieux sur l'agrandissement, comprend une enceinte principale 14 et une enceinte secondaire 16. L'enceinte secondaire 16 est délimitée, dans l'enceinte principale, par une coupelle mobile 18 qui est rappelée en permanence dans le sens du freinage par un ressort de rappel principal 20. La tige du piston 12 est rappelée en permanence vers le fond de la coupelle par un ressort secondaire 22. Une conduite hydraulique 24 est reliée à l'enceinte principale 14. On comprend que lorsque cette conduite n'est pas alimentée en fluide, le vérin est dans la position représentée sur la figure 1, dans laquelle le ressort 20 repousse le piston, de sorte que le freinage est actif, en situation de frein de parking. Pour réaliser un défreinage, c'est-à-dire pour désactiver ce frein de parking afin de permettre une circulation de la remorque, l'enceinte principale doit être alimentée en fluide sous pression par la conduite 24. Pour une pression donnée correspondant au tarage du ressort 20 (par exemple de l'ordre de 8 à 15 bars), la coupelle 18 est repoussée vers le fond 14A de l'enceinte principale à l'encontre de l'effort de rappel du ressort 20, ce qui permet le déplacement du piston 12 nécessaire au défreinage. Lorsque, à partir de cette situation, un freinage de service est nécessaire, on augmente encore la pression d'alimentation de la conduite 24, et cette pression augmentée permet d'écarter la tige de piston 12 du fond de la coupelle 18 à l'encontre de l'effort de rappel du ressort secondaire 22, ce qui sollicite les organes mécaniques de freinage vers leur position de freinage. Si l'alimentation de fluide de freinage cesse, on réalise automatiquement un freinage de secours, puisque la situation redevient celle d'un frein de parking. On comprend donc que ce type de remorque nécessite :
- une absence de pression dans la conduite 24 pour permettre l'activation du frein de parking ou de secours ;
- une pression moyenne dans cette conduite pour permettre un défreinage ;
- une pression augmentée dans cette conduite pour permettre l'activation du frein de service.

Le système S2 comprend des organes mécaniques de freinage 10 et 12, par exemple du même type que ceux du système S1. Le piston 12 est mobile dans un cylindre 13, et le freinage est provoqué par alimentation en fluide d'une chambre de freinage 26 située d'un côté du piston, à l'encontre de l'effort de rappel exercé par un ressort de rappel 28, par exemple situé de l'autre côté. Le système de freinage S2 est de type français, à accumulation. Il comprend en effet un accumulateur 30 qui permet une activation en frein de secours. Le système de freinage équipant la remorque de type S2 comprend en outre une électrovalve 32 interposée sur la conduite de freinage 34 reliée à la chambre hydraulique 26, et une électrovalve 36 disposée sur la dérivation 38 qui relie l'accumulateur 30 à la conduite 34, en aval de l'électrovalve 32. Ces électrovalves sont commandées par une unité électrique UE, qui commande également les feux de stop 40 de la remorque.

Lors de la mise en circulation de la remorque, les électrovalves 32 et 36 sont commandées dans leur position commandée II, et le fluide hydraulique peut circuler dans la conduite 34 pour vidanger les freins. Pour réaliser un premier freinage, le fluide hydraulique circule dans le sens du remplissage de la chambre de freinage 26, lequel remplissage provoque le freinage. Lors de ce remplissage de la chambre 26, l'électrovalve 36 étant dans sa position commandée II, le fluide peut circuler de la conduite 34 vers l'accumulateur 30 à travers l'électrovalve 36, sans pouvoir revenir en sens inverse vers la chambre 26. L'accumulateur est donc rempli de fluide à l'occasion du premier freinage.

Pour un freinage de secours, les électrovalves 32 et 36 cessent d'être alimentées, de sorte qu'elles reviennent dans leur position I. Ainsi, le fluide contenu dans l'accumulateur 30 peut circuler vers la chambre 26 pour provoquer le freinage, et le fluide n'est pas évacué de cette chambre puisque la valve 32 est dans sa position I.

Le système S3 est celui d'une remorque de type français, sans accumulation, les organes de frein 10, 12 étant du même type que ceux précédemment évoqués, et le freinage étant réalisé par alimentation en fluide d'une chambre hydraulique 26 par la conduite de frein 34, pour provoquer un déplacement du piston de frein à l'encontre de l'effort de rappel d'un ressort 28.

Classiquement, les remorques sont attelées au tracteur par l'intermédiaire de coupleurs comprenant un coupleur CT qui est solidaire du tracteur et un coupleur CR qui est solidaire de la remorque. Ces coupleurs permettent à la fois une connexion électrique et une connexion hydraulique.

Dans la situation S0, aucune remorque n'est attelée et le coupleur CT n'est pas connecté.

On décrit maintenant la partie gauche de la figure 1, qui représente le dispositif conforme à l'invention, selon un premier mode de réalisation.

Le circuit hydraulique de ce dispositif comprend une pompe hydraulique 50, qui pourrait en particulier être une pompe dite de type "load sensing" dont le débit est régulé pour éviter les variations de débit sous l'effet de variations de charge de la pompe. Cette pompe alimente une conduite principale 52, dans laquelle la pression est limitée par un limiteur de pression 54.

La conduite 52 permet d'alimenter le circuit de frein. Toutefois, il peut être souhaitable que la pompe 50 soit également utilisée pour commander des fonctions auxiliaires du tracteur, par exemple la suspension de ce dernier, les vérins de relevage de sa flèche, l'entraînement hydraulique d'un outil, ou encore des options diverses. Pour cette raison, une valve de priorité 56 est disposée sur la conduite 52. Cette valve sert à permettre d'assurer les fonctions auxiliaires, tout en permettant, en priorité, d'assurer le freinage qui est une fonction de sécurité. Ainsi, la valve 56 est susceptible d'occuper deux positions, une position I, dans laquelle son entrée 56A est seulement reliée à sa première sortie 56B à laquelle est raccordé un tronçon d'entrée 58 du circuit de freinage. Si la pression dans la conduite 52 est suffisante, la valve 56 peut occuper sa position II, dans laquelle son entrée 56A est également reliée à sa deuxième sortie 56C, permettant, par une conduite FA, l'alimentation des dispositifs hydrauliques nécessaires à l'accomplissement des fonctions auxiliaires.

Le tronçon d'entrée 58 peut être directement la conduite de frein ou bien, comme dans l'exemple représenté, être raccordé à une conduite FT, qui sert à l'alimentation nécessaire au freinage du tracteur (le système de freinage du tracteur n'étant pas représenté), et à une conduite FR qui sert au freinage de la remorque, les conduites FT et FR étant en dérivation sur la conduite 58.

Pour le freinage de la remorque, le circuit comprend une conduite de frein 60 qui, par un système de valve, peut être relié soit à la conduite FR, soit à un réservoir R sans surpression. On comprend que le raccordement de la conduite 60 à la conduite FR par ce système de valve permet en fait le raccordement de cette conduite à la pompe 50. Comme on le voit sur la figure 1, la conduite de frein 60 est reliée au coupleur de tracteur CT pour permettre la commande hydraulique du frein de la remorque.

Selon l'invention, le système de valve précité comprend un réducteur de pression proportionnel 62, des moyens d'électrovalve de liaison 64 et un réducteur de pression taré 66.

Plus précisément, le réducteur de pression proportionnel présente une première voie 62A qui est reliée aux moyens d'électrovalve de liaison 64, une deuxième voie 62B qui est reliée à la pompe 50 par l'intermédiaire de la conduite FR et une troisième voie 62C qui est reliée à la conduite de frein 60.

Selon la position des moyens d'électrovalve de liaison, la première voie 62A du réducteur 62 peut être reliée soit au réservoir R, par une conduite de vidange 61, soit au réducteur de pression taré 66.

Les moyens d'électrovalve de liaison comprennent au moins une électrovalve. En l'espèce, il s'agit d'une électrovalve 64 ayant trois voies et deux positions. La première voie 64A de cette électrovalve est reliée à la première voie 62A du réducteur de pression proportionnel 62, sa deuxième voie 64B est reliée au réservoir R par la conduite 61, et sa troisième voie 64C est reliée à une conduite auxiliaire 65.

C'est cette conduite auxiliaire 65 qui, selon la position du réducteur de pression taré 66, peut être raccordée soit à la pompe 50, soit au réservoir R. En effet, le réducteur de pression taré 66 présente une première voie 66A reliée au réservoir R par la conduite 61, une deuxième voie 66B reliée à la pompe 50 par la conduite FR, et une troisième voie 66C reliée à la conduite auxiliaire 65.

De manière classique, le réducteur de pression proportionnel 62 est commandé entre une première position extrême I, dans laquelle ses voies 62B et 62C sont reliées pour raccorder la conduite de frein 60 à la pompe 50 et une deuxième position extrême II dans laquelle ses voies 62A et 62C sont reliées pour raccorder la conduite de frein 60 à la première voie 64A de l'électrovalve 64. La position de repos du réducteur 62 est sa position II.

L'électrovalve 64 peut occuper une position I qui est sa position de repos, dans laquelle ses voies 64A et 64B sont reliées, et une deuxième position II dans laquelle ses voies 64A et 64C sont reliées, On comprend donc que, dans la position I de l'électrovalve 64, la première voie 62A du réducteur 62 est reliée au réservoir. En conséquence, dans cette position de l'électrovalve 64, la commande de ce réducteur 62 permet de raccorder, par l'intermédiaire dudit réducteur, la conduite de frein 60 soit à la pompe 50, soit au réservoir R. Lorsque, en revanche, l'électrovalve 64 est dans sa position II, alors la première voie 62A du réducteur 62 est reliée à la conduite auxiliaire 65. En conséquence; pour réaliser un réglage fin de la pression dans la conduite de frein 60, nécessaire au défreinage d'une remorque de type italien, on place le réducteur de pression proportionnel 62 et l'électrovalve 64 dans leurs positions II et le réglage fin de la pression est réalisé par le réducteur taré 66, à la valeur de la pression de tarage de ce dernier.

Un limiteur de pression 68 est disposé sur une dérivation 67 de la conduite auxiliaire 65. Il est en effet relié à son entrée à la conduite auxiliaire tandis que sa sortie est reliée au réservoir R. Ce limiteur permet d'écrêter la pression dans la conduite auxiliaire 65 et donc dans la conduite de frein 60 lorsque le réducteur 62 et l'électrovalve 64 sont dans leurs positions II pour un réglage fin de la pression.

Le réducteur de pression 66 est un réducteur de pression classique qui maintient une pression sensiblement constante dans la conduite auxiliaire 65. De leur côté, le réducteur 62 et l'électrovalve 64 sont commandés électriquement, par une unité de commande électronique ECU, respectivement par des lignes de commande 162 et 164.

Dans l'exemple représenté, cette unité ECU reçoit également une information sur la pression dans la conduite de frein 60, par une ligne IP, raccordée à un capteur de pression CP.

L'unité ECU reçoit par ailleurs une information IS relative au type de remorque attelée au tracteur et une information de freinage IF. Cette information est fonction du niveau de freinage souhaité, l'information du niveau de freinage pouvant être liée à l'enfoncement ou à l'effort sur la pédale ou le levier de commande du freinage, à la pression du fluide dans le circuit de freinage du tracteur ou à tout autre moyen approprié. La commande du réducteur 62 par l'unité ECU tient compte du niveau de freinage souhaité et celle de l'électrovalve 64 tient compte du type de remorque.

En fonctionnement normal, lorsque l'information IS révèle la présence d'une remorque de type italien, l'unité ECU commande l'électrovalve 64 dans sa position I et le réducteur 62 dans sa position de repos II, pour relier la sortie de ce réducteur au réservoir R. La conduite de frein 60 est alors reliée à ce réservoir et le frein de parking est donc appliqué.

Pour désengager ce frein de parking et permettre la circulation de la remorque, l'unité ECU commande l'électrovalve 64 dans sa position II et, pendant un court instant, elle commande le réducteur 62 dans sa position I pour relier ainsi la voie 62B de ce réducteur à la pompe 50 et permettre l'alimentation en fluide rapide de la conduite de frein jusqu'à obtenir dans cette dernière une pression de 10 à 15 bars. Le signal de commande du réducteur 62 est rapidement ramené à zéro pour que ce réducteur revienne dans sa position de repos II. L'électrovalve 64 occupant sa position II, la conduite de frein 60 est alors reliée à la voie 66C du réducteur 66 qui règle plus finement la pression dans la conduite de frein pour maintenir dans cette dernière une pression de l'ordre de 10 à 13 bars, pour garantir le défreinage de la remorque.

La durée du signal de commande du réducteur 62 permettant d'atteindre une pression de 10 à 15 bars dans la conduite de frein avant le réglage fin par le réducteur 66 peut être déterminée par des essais. En variante, l'unité ECU peut être paramétrée pour ramener ce signal à zéro lorsque la pression dans la conduite 60, mesurée par le capteur CP, atteint la valeur souhaitée.

Pour réaliser un freinage de service de la remorque lorsqu'elle est en circulation, c'est le réducteur 62 qui est commandé entre ses positions II et I de manière à obtenir le niveau de pression souhaité (entre 18 et 140 bars) dans la conduite de frein.

Lorsque l'information IS révèle la présence d'une remorque de type français, l'unité ECU place l'électrovalve 64 et le réducteur 62 dans leurs positions de repos, de sorte que la conduite de frein 60 est reliée au réservoir. La remorque de type français peut alors circuler. Pour réaliser le freinage d'une telle remorque, le réducteur 62 est commandé par l'unité ECU pour fournir une pression souhaitée, pouvant atteindre au maximum 140 ou 150 bars, tandis que l'électrovalve 64 reste dans sa position I de repos

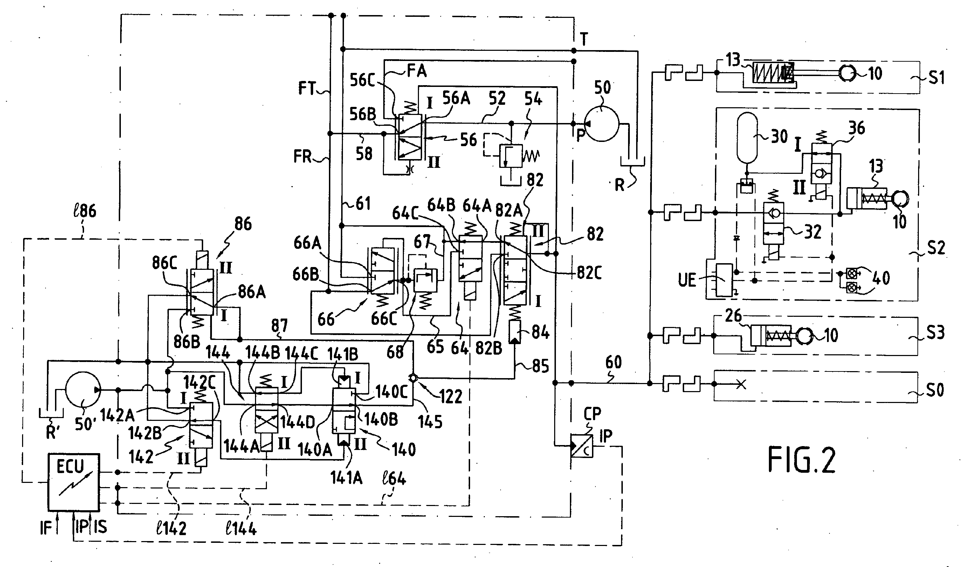

On décrit maintenant la figure 2, sur laquelle les éléments inchangés par rapport à la figure 1 sont désignés par les mêmes références.

Sur la figure 2, le réducteur de pression proportionnel est une valve à commande hydraulique 82, comprenant une chambre de commande 84, qui peut être reliée à une alimentation en fluide par l'intermédiaire d'une électrovalve pilote proportionnelle 86, elle-même commandée par l'unité de commande électronique ECU, par une ligne de commande 186.

Plus précisément, l'électrovalve pilote 86 présente une première voie 86A qui, par une conduite de commande 87, est reliée à une conduite de pilotage 85, elle-même raccordée à la chambre de commande 84, une deuxième voie 86B qui est reliée à une pompe 50' pour alimenter en fluide cette conduite, et une troisième voie 86C qui est reliée à une enceinte sans surpression R'. Les pompes 50 et 50' pourraient être une seule et même pompe, ou bien être deux pompes différentes. En particulier, le fluide utilisé pour le pilotage du réducteur de pression proportionnel 82 peut avoir des propriétés différentes de celui qui est utilisé pour le freinage par la conduite de frein 60, et par exemple présenter une viscosité différente. Dans ce cas, la pompe 50' est une source auxiliaire de fluide, différente de la pompe 50, généralement à débit et pression plus faibles, donc de plus petites dimensions et plus économique, et l'enceinte sans surpression R' est différente du réservoir R.

L'électrovalve pilote 86 occupe au repos une position extrême I, dans laquelle ses voies 86A et 86C sont reliées, tandis qu'elle peut être commandée par un signal émis dans la ligne de commande 186 par l'unité ECU, vers sa position extrême II, dans laquelle ses voies 86A et 86B sont reliées.

Le réducteur de pression proportionnel 82 présente des voies 82A, 82B et 82C respectivement analogues aux voies 62A, 62B et 62C du réducteur 62 de la figure 1. Dans sa position de repos II, ses voies 82A et 82C sont reliées tandis que dans sa position commandée I, ses voies 82B et 82C sont reliées. La liaison entre les voies 82A, 82B et 82C et les différentes conduites du circuit est la même que la liaison des voies 62A, 62B et 62C du réducteur de la figure 1 avec les mêmes conduites.

Lorsque l'électrovalve pilote 86 occupe sa position I, la liaison entre ses voies 86A et 86C relie la chambre de commande 84 du réducteur 82 à l'enceinte sans surpression R', permettant ainsi que le réducteur 82 occupe sa position II. On obtient alors le même fonctionnement que lorsque le réducteur 62 de la figure 1 est dans sa position II.

Dans la position II de l'électrovalve pilote 86, la liaison entre ses voies 86A et 86B permet la liaison entre la conduite de pilotage 85 et la pompe 50'. Ainsi, lorsque cette l'électrovalve 86 est pilotée par un signal électrique dans la ligne 186 vers sa position II, elle permet d'établir dans la conduite de commande 87 une pression proportionnelle au signal transmis par l'unité ECU et d'alimenter en fluide la chambre de commande 84 du réducteur 82 pour solliciter ce dernier dans sa position I pour qu'il alimente la conduite de freinage 60 à la pression qui correspond au besoin d'intensité de freinage de la remorque. Le fonctionnement est alors le même que celui du réducteur 62 de la figure 1.

L'intérêt du réducteur de pression 82 à commande hydraulique avec un étage de multiplication de pression est d'autoriser des débits importants en ne nécessitant qu'un étage de commande électrique, réalisée par l'électrovalve pilote 86, qui peut alors avoir de petites dimensions pour générer une pression de commande et un débit faibles.

Le circuit représenté sur la figure 2 comprend en outre un sélecteur hydraulique de freinage 140 commandé hydrauliquement par des moyens d'électrovalve de commande qui, en l'espèce, comprennent deux électrovalves, respectivement 142 et 144. Ce sélecteur 140 peut ainsi adopter une position de liaison I dans laquelle l'entrée 140A et la sortie 140B du sélecteur 140 sont reliées et une position d'isolement II dans laquelle cette entrée et cette sortie sont isolées. En plus de son entrée et de sa sortie, le sélecteur de freinage 140 comprend une voie auxiliaire 140C qui est reliée à l'enceinte sans surpression R'. Dans la position de liaison I de ce sélecteur, l'entrée et la sortie 140A et 140B sont reliées en étant isolées de la voie auxiliaire 140C, tandis que, dans la position d'isolement II,sa sortie 140B est reliée à cette voie auxiliaire 140C en étant isolée de l'entrée 140A .

La première électrovalve 142 de commande du sélecteur 140 présente une première voie 142A reliée à la pompe 50', une deuxième voie 142B reliée au réservoir R' et une troisième voie 142C reliée à une première chambre de commande 141A du sélecteur 140. La deuxième électrovalve 144 présente une première voie 144A reliée à la pompe 50', une deuxième voie 144B reliée au réservoir, une troisième voie 144C reliée à la deuxième chambre de commande 141B du sélecteur 140 et une quatrième voie 144D reliée à la première voie 140A du sélecteur 140.

Les électrovalves 142 et 144 sont commandées par l'unité ECU, respectivement par les lignes de commande 1142 et 1144. En l'absence de signal de commande, l'électrovalve 142 occupe sa position I, dans laquelle ses deuxième et troisième voies 142B et 142C sont reliées en étant isolées de sa première voie 142A tandis que, lorsqu'elle est commandée, cette électrovalve occupe sa position II dans laquelle ses première et troisième voies 142A et 142C sont reliées en étant isolées de sa deuxième voie 142B. On comprend que, lorsqu'elle occupe sa position I représentée sur la figure 2, l'électrovalve 142 relie la chambre de commande hydraulique 141A du sélecteur 140 au réservoir R' tandis que, lorsqu'elle occupe sa position II, elle relie cette chambre à la pompe 50'.

De même, la deuxième électrovalve 144 occupe sa position I sans signal électrique dans sa ligne de commande I144 reliée à l'unité ECU, position dans laquelle ses deuxième et troisième voies 144B et 144C sont reliées (de sorte que la chambre de commande hydraulique 141B du sélecteur 140 est reliée au réservoir R') tandis que ses première et quatrième voies 144A et 144D sont reliées (de sorte que l'entrée 140A du sélecteur est reliée à la pompe 50'). Lorsqu'elle est commandée par un signal dans la ligne I144, l'électrovalve 144 occupe sa position II, dans laquelle ses première et troisième voies sont reliées et ses deuxième et quatrième voies sont également reliées, de sorte que la chambre hydraulique de commande 141B du sélecteur est reliée à la pompe 50'.

L'entrée 140A du sélecteur 140 est reliée à la quatrième voie 144D de l'électrovalve 144, tandis que sa sortie 140B est reliée à une conduite de liaison 145 et que sa voie auxiliaire 140C est reliée au réservoir R'. On comprend que, lorsque le sélecteur 140 est dans sa position I représentée sur la figure 2 et que l'électrovalve 144 est également dans sa position I, la conduite de liaison 145 est alimentée en fluide provenant de la pompe 50'. En revanche, lorsque le sélecteur 140 est dans sa position II, sa sortie 140B est isolée de son entrée 140A et n'est donc plus alimentée par la pompe 50'. Lorsque la voie auxiliaire 140C est présente, la sortie 140B est alors au contraire reliée au réservoir R'.

Les électrovalves 142 et 144 peuvent adopter une première configuration de travail, dans laquelle l'électrovalve 142 est en position II tandis que l'électrovalve 144 est en position I, de sorte que la chambre de commande 141A est alimentée en fluide et sollicite donc le sélecteur 140 dans sa position d'isolement II dans laquelle son entrée et sa sortie sont isolées. Dans ce cas, la conduite de liaison 145 n'est pas alimentée en fluide. En l'espèce, les deux électrovalves 142 et 144 étant naturellement rappelées dans leurs positions I, cette première configuration de travail est obtenue en émettant un signal de commande dans la ligne I142 mais pas dans la ligne I144.

Les électrovalves 142 et 144 peuvent adopter une deuxième configuration de travail, dans laquelle l'électrovalve 142 est dans sa position I tandis que l'électrovalve 144 est dans sa position II, de sorte que la chambre de commande 141B est alimentée en fluide et sollicite le déplacement du sélecteur 140 dans sa position de liaison I dans laquelle son entrée et sa sortie 140A et 140B sont reliées. Dans cette deuxième configuration de travail, l'entrée 140A du sélecteur 140 est en outre reliée au réservoir R' par la liaison entre les voies 144B et 144D de la deuxième électrovalve 144, de sorte que la conduite 145 peut être reliée à ce réservoir R'. Ainsi, l'entrée 140A du sélecteur 140 est reliée au réservoir R' au moins lorsque les électrovalves 142 et 144 sont dans leur deuxième configuration de travail.

Les électrovalves 142 et 144 peuvent en outre occuper une configuration neutre, dans laquelle elles sont toutes deux dans la position I, de sorte qu'aucune des deux chambres de commande 141A et 141B du sélecteur de freinage 140 n'est alimentée en fluide ; elles sont alors sensiblement mises à la même pression. Cette configuration neutre est obtenue en l'absence de signal de commande dans les lignes 1142 et I144.

Lors du passage des électrovalves 142 et 144 de l'une de leurs configurations de travail à leur configuration neutre, le sélecteur 140 reste dans la position qu'il occupe, grâce à l'existence de moyens de maintien qui seront décrits dans la suite. Ainsi, si les électrovalves 142 et 144 étaient dans leur deuxième configuration de travail, le sélecteur 140 reste dans sa position de liaison I. Toutefois, l'électrovalve 144 étant en sa position I dans ladite configuration neutre, la conduite de liaison 145 est alors reliée à l'alimentation en fluide par la liaison entre les première et quatrième voies 144A et 144D de l'électrovalve 144. Si, en revanche, les électrovalves passent de leur première configuration de travail à leur configuration neutre, le sélecteur 140 reste dans sa position d'isolement II.

La conduite de liaison 145 est reliée à la conduite de pilotage 85 du réducteur 82. Plus précisément, la conduite de pilotage 85 est reliée à cette conduite de liaison et à la conduite de commande 87 de l'électrovalve pilote 86 par des moyens de sélection de la plus haute pression entre les conduites 87 et 145. Ces moyens sont constitués en l'espèce par un clapet navette 122.

Le fonctionnement est le suivant. Lorsque l'information IS transmise à l'unité ECU révèle qu'une remorque de type italien est attelée au tracteur, l'unité ECU émet un signal dans la ligne de commande 1142 pour commander l'électrovalve 142 dans sa position II, tandis que l'électrovalve 144 reste dans sa position I. Ces électrovalves 142 et 144 sont donc dans leur première configuration de travail. Dans ce cas, le sélecteur 140 est placé dans sa position d'isolement II et la conduite de liaison 145 n'est pas alimentée en fluide (elle est même reliée au réservoir R' lorsque, comme en l'espèce, la voie auxiliaire 140C est présente). C'est donc par la pression dans la conduite de commande 87 de l'électrovalve pilote 86 que le réducteur 82 peut être commandé entre ses positions I et II. Ainsi, pour désengager le frein de parking de la remorque, l'électrovalve 64 est commandée dans sa position II par un signal dans la ligne 164 et c'est le pilotage du réducteur de pression taré 66 qui fournit, dans la conduite de frein 60, la pression de 10 à 15 bars nécessaire à ce désengagement. Toutefois, l'électrovalve pilote 86 peut recevoir pendant un court instant un signal différent de zéro par sa ligne de commande I86 pour alimenter la chambre de commande 84 du réducteur 82 par une pression qui tient compte du facteur de multiplication de la commande hydraulique de ce réducteur 82 de manière à fournir, en sortie dudit réducteur 82, une pression de sortie de l'ordre de 10 à 15 bars avec l'avantage d'un remplissage rapide des cylindres de frein. Ce signal de ligne I86 peut être rapidement ramené à zéro pour que le réglage affiné de la pression dans la conduite de frein s'opère ensuite uniquement par le réglage du réducteur 66. Comme dans le cas de la figure 1, le limiteur.de pression 68 permet d'écrêter la pression de défreinage dans les limites souhaitées.

Pour réaliser un freinage de service de la remorque alors en circulation, le réducteur 82 est piloté dans sa position I par la commande de l'électrovalve pilote 86 résultant d'un signal émis dans la ligne I86, pour obtenir la pression souhaitée dans la conduite de frein 60.

Le sélecteur hydraulique de freinage 140 et ses électrovalves de commande 142 et 144 permettent d'obtenir un freinage d'urgence en cas de défaillance électrique. En effet, dans ce cas, les électrovalves retournent à leurs positions de repos et, en particulier, l'électrovalve 142 est ramenée dans sa position I, de sorte que les électrovalves 142 et 144 sont dans leur configuration neutre. Le sélecteur 140 reste toutefois dans sa position d'isolement II grâce à ses moyens de maintien en position qui seront décrits dans la suite, de sorte que son entrée 140A est isolée de sa sortie 140B. L'électrovalve pilote 86 est alors dans sa position de repos I, de sorte que la conduite de commande 87 est reliée au réservoir R'. Ainsi, la chambre de commande 84 du réducteur 82 n'est pas alimentée en fluide sous pression et ce réducteur occupe sa position de repos II, tandis que l'électrovalve de liaison 64 est dans sa position de repos I, de sorte que la voie 82C du réducteur 82 est reliée au réservoir R. Ainsi, la conduite de frein n'est pas alimentée en fluide et le frein de parking s'applique.

Lorsque l'information IS donnée à l'unité ECU révèle l'attelage d'une remorque de type français, cette unité ECU émet un signal de commande dans la ligne 1144 pour commander l'électrovalve 144 dans sa position II, tandis qu'aucun signal n'est émis dans la ligne 1142 de sorte que l'électrovalve 142 reste dans sa position I. Ces électrovalves de commande 142 et 144 sont alors dans leur deuxième configuration de travail. Dans ce cas, la deuxième chambre de commande 141B du sélecteur 140 est reliée à la pompe 50', de sorte que le sélecteur 140 est piloté dans sa position de liaison I. Dans la mesure où, dans cette situation, l'électrovalve 144 est dans sa position II, la conduite de liaison 145 est alors reliée au réservoir R'. C'est donc par la pression dans la conduite de pilotage 87 que le réducteur 82 est piloté. Pour permettre la circulation de la remorque, ce réducteur 82 reste dans sa position de repos II et l'électrovalve de liaison 64 reste également dans sa position de repos I. La conduite de frein 60 est alors reliée au réservoir R par le réducteur 62 et l'électrovalve 64, ce qui permet la vidange des cylindres de frein. La remorque est ainsi en configuration non freinée.

Pour un freinage de service, le réducteur 82 est piloté de manière à parvenir dans sa position I. Pour cela, un signal de commande dans la ligne 186 correspondant au niveau de freinage souhaité place l'électrovalve pilote 86 dans sa position II, de sorte que la conduite de commande 87 est alimentée en fluide par la pompe 50' à une pression qui permet l'alimentation en fluide de la chambre de commande 84 du réducteur 82 pour positionner ce dernier dans sa position I, dans laquelle la conduite de frein 60 est reliée à la pompe 50 et alimentée à la pression correspondant au niveau de freinage souhaité.

En cas de défaillance électrique, les électrovalves occupent leur position de repos. Ainsi, l'électrovalve de liaison 64 est dans sa position I, de même que l'électrovalve pilote 86. De leur côté, les électrovalves de commande 142 et 144 sont dans leur position de repos respective, ce qui correspond à leur configuration neutre. En conséquence, les chambres de commande 141A et 141B du sélecteur 140 ne sont pas alimentées en fluide mais ce sélecteur reste dans sa position de liaison I grâce à ses moyens de maintien en position. Dans la mesure où l'électrovalve 144 est alors dans sa position de repos I, la conduite de liaison 145 est alimentée en fluide provenant de la pompe 50', ce qui permet l'alimentation de la chambre de commande 84 du réducteur 82 par cette conduite (la conduite de commande 87 est quant à elle reliée au réservoir R', de sorte que la pression dans la conduite 145 prédomine sur la pression de la conduite 87 et alimente donc la conduite de pilotage 85 par l'intermédiaire du clapet navette 122).

Dans l'exemple qui vient d'être décrit, les moyens d'électrovalve de commande du sélecteur hydraulique de freinage 140 comprennent deux électrovalves 142 et 144 ayant chacune deux positions.

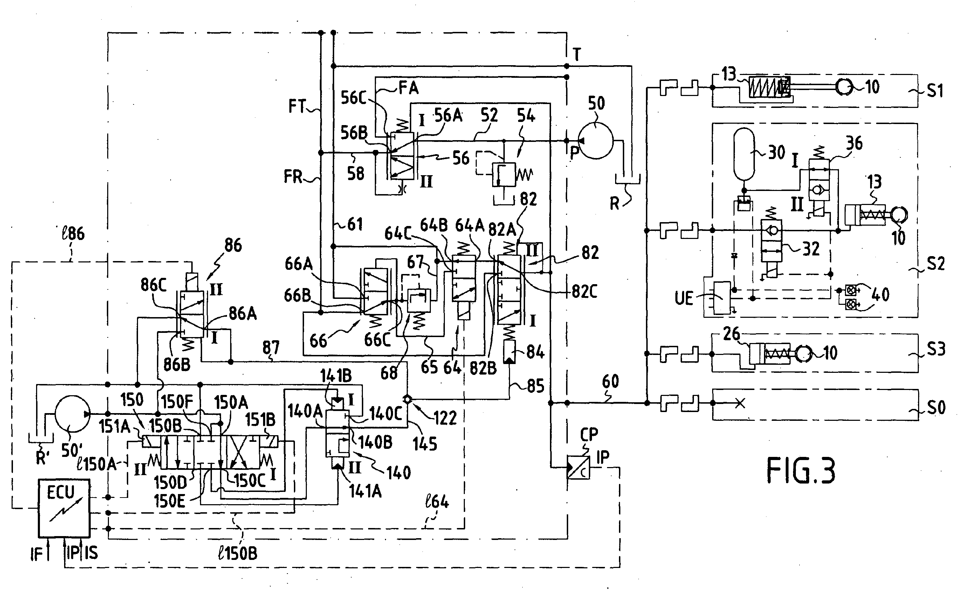

On décrit maintenant la figure 3, sur laquelle les éléments inchangés par rapport à la figure 2 sont désignés par les mêmes références. Sur la figure 3, les moyens de commande de ce sélecteur 140 comprennent cette fois une seule électrovalve 150 à trois positions. Cette électrovalve présente une première voie 150A reliée à la pompe 50', une deuxième voie 150B reliée au réservoir R', une troisième voie 150C reliée à la première voie 140A du sélecteur 140, une quatrième voie 150D reliée à la première chambre de commande 141A du sélecteur 140 et une cinquième voie 150E reliée à la deuxième chambre de commande 141B du sélecteur 140. En l'espèce, l'électrovalve 150 peut être une électrovalve à six voies de type plus courant qu'une électrovalve à cinq voies, la sixième voie 150F étant désactivée, en étant par exemple reliée en permanence à la première voie 150A.

L'émission d'un signal dans la ligne de commande I150B reliée à la commande 151B permet de placer l'électrovalve de commande 150 dans sa première position I, qui est sa première configuration de travail, dans laquelle la première chambre de commande 141A du sélecteur 140 est alimentée en fluide. L'émission d'un signal dans la ligne I150A reliée à la commande 151A permet de placer l'électrovalve de commande 150 dans sa deuxième position II, qui est la deuxième configuration de travail, dans laquelle c'est cette fois la chambre de commande 141B qui est reliée à l'alimentation en fluide. En effet, dans la position I de l'électrovalve 150, les voies 150A et 150D sont reliées entre elles et les voies 150B et 150E sont reliées entre elles. Dans la deuxième configuration de travail, les voies 150B et 150D sont reliées entre elles et les voies 150A et 150E sont reliées entre elles.

Lorsqu'aucun signal de commande n'est émis, l'électrovalve 150 occupe sa position neutre 0, dans laquelle les voies 150A et 150C sont reliées pour permettre la liaison de la première voie 140A du sélecteur 140 avec la pompe 50', tandis que les autres voies de l'électrovalve sont isolées. Le fonctionnement du dispositif est le même que celui qui a été décrit en référence avec la figure 2.

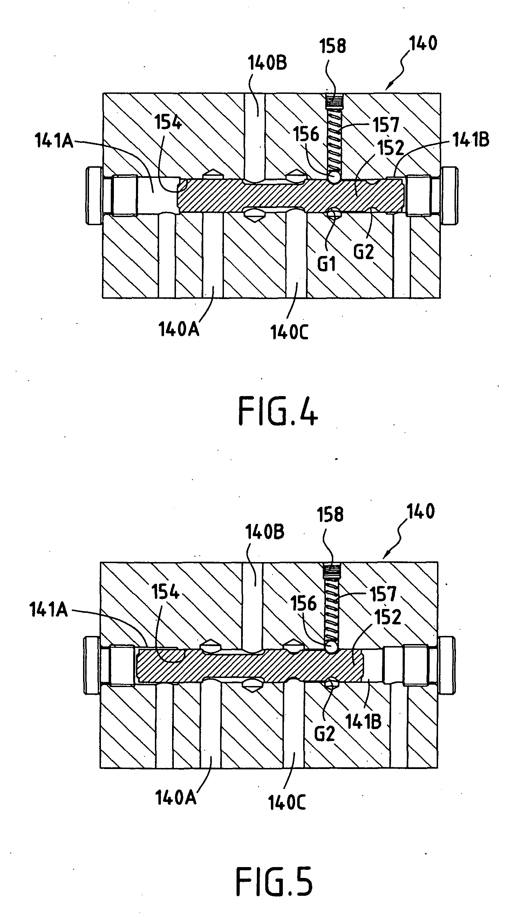

En référence aux figures 4 et 5, on décrit maintenant les moyens qui permettent de maintenir le sélecteur 140 en position lorsqu'il cesse d'être sollicité par l'alimentation de ses chambres de commande 141A et 141B. On voit que ce sélecteur comprend un tiroir 152 qui est mobile dans un alésage 154. Dans cet alésage débouchent les diverses voies du sélecteur, à savoir son entrée 140A, sa sortie 140B et sa voie auxiliaire 140C. Sur la figure 4, le sélecteur 140 est dans sa position d'isolement II, sa sortie 140B étant reliée à la voie auxiliaire 140C tandis que l'entrée 140A est isolée. Sur la figure 5, le sélecteur est dans sa position de liaison I, l'entrée 140A étant reliée à la sortie 1408 tandis que la voie auxiliaire 140C est isolée.

Les moyens pour maintenir le sélecteur en position comprennent des moyens élastiques solidaires de l'alésage 154, qui sont rappelés en permanence vers une position de maintien dans laquelle, lorsqu'ils se trouvent en regard d'une gorge du tiroir, ils font saillie dans cette gorge. En l'espèce, ces moyens élastiques comprennent une bille 156 rappelée en permanence contre la paroi du tiroir 152 par un ressort 157 disposé dans un alésage perpendiculaire à l'alésage 154 et bouché par un bouchon 158 du côté opposé à l'alésage 154. Le tiroir présente deux gorges, respectivement G1 et G2. Sur la figure 4, la bille 156 pénètre dans la gorge G1, ce qui tend à maintenir le tiroir 152 dans sa position II même lorsque la pression dans la chambre 141A diminue lors d'un retour des moyens d'électrovalve de commande à leur position neutre. Sur la figure 5, la bille 156 est en contact avec le fond de la gorge G2, ce qui tend à maintenir le tiroir dans sa position I même si la pression dans la chambre 141B diminue lors d'un retour des moyens d'électrovalve de commande à leur position neutre.

Bien entendu, on pourrait inverser ces moyens de maintien en position, en prévoyant que les moyens élastiques soient solidaires du tiroir et que, lorsqu'ils se trouvent en regard d'une gorge de l'alésage, ils fassent saillie dans cette gorge. Par exemple, dans ce cas, ces moyens élastiques pourraient être du type d'un circlips ayant tendance à adopter naturellement une configuration radialement expansée.

Les signaux de command des électrovalves et les informations reçues par l'unité ECU peuvent être transmis par des liaisons filaires ou non filaires.

## Revendications

1. Dispositif de commande du freinage hydraulique d'une remorque attelée à un tracteur, comprenant un circuit hydraulique ayant une conduite de frein (60) apte à être reliée à une source de fluide sous pression (50) ou à un réservoir sans surpression (R) par l'intermédiaire d'un réducteur de pression proportionnel (62 ; 82) commandé par des moyens de commande comprenant une unité de commande électronique (ECU),
**caractérisé en ce que** le circuit comprend des moyens d'électrovalve de liaison (64) aptes à relier le réducteur de pression proportionnel (62 ; 82) au réservoir (R) ou, par l'intermédiaire d'un réducteur de pression taré (66), à la source de fluide sous pression (50).

2. Dispositif selon la revendication 1, **caractérisé en ce qu'**un limiteur de pression (68) est disposé sur une liaison entre le réducteur de pression taré (66) et les moyens d'électrovalve de liaison (64).

3. Dispositif selon la revendication 1 ou 2, **caractérisé en ce que** les moyens d'électrovalve de liaison (64) présentent une première voie (64A) reliée à une première voie (62A ; 82A) du réducteur de pression proportionnel (62 ; 82), une deuxième voie (64B) reliée au réservoir (R) et une troisième voie (64C) repliée à une conduite auxiliaire (65) apte à être raccordée à la source de fluide (50) ou au réservoir (R) par l'intermédiaire du réducteur de pression taré (66), les moyens d'électrovalve de liaison (64) étant aptes à être commandés pour relier lesdites première et deuxième voies ou lesdites première et troisième voies.

4. Dispositif selon la revendication 3, **caractérisé en ce que** le réducteur dé pression proportionnel (62 ; 82) présente une deuxième voie (62B ; 82B) reliée à la source de fluide sous pression (50) et une troisième voie (62C ; 82C) reliée à la conduite de frein (60) et **en ce que** le réducteur de pression taré (66) présente une première voie (66A) reliée au réservoir (R), une deuxième voie (66B) reliée à la source de fluide sous pression (50) et une troisième voie (66C) reliée à la conduite auxiliaire (65).

5. Dispositif selon la revendication 2 et l'une quelconque des revendications 1 à 4, **caractérisé en ce que** le limiteur de pression (68) est disposé sur une dérivation (67) de la conduite auxiliaire (65).

6. Dispositif selon l'une quelconque des revendications 1 à 5, **caractérisé en ce que** le réducteur de pression proportionnel (62) est une électrovalve, commandée par l'unité de commande électronique (ECU).

7. Dispositif selon l'une quelconque des revendications 1 à 5, **caractérisé en ce que** le réducteur de pression proportionnel (82) est une valve à commande hydraulique, comprenant une chambre de commande (84) apte à être reliée à une alimentation en fluide de commande par l'intermédiaire d'une électrovalve pilote proportionnelle (86), elle-mêmes commandée par l'unité de commande électronique (ECU).

8. Dispositif selon l'une quelconque des revendications 1 à 7, **caractérisé en ce que** le circuit comprend un sélecteur hydraulique de freinage (140) apte, dans une position de liaison (I) dans laquelle l'entrée (140A) et la sortie (140B) du sélecteur de freinage sont reliées, à provoquer le raccordement d'une conduite de liaison (145) avec une alimentation en fluide (50') ou avec une enceinte sans surpression (R'), et des moyens (142, 144 ; 150) d'électrovalve de commande de ce sélecteur de freinage commandés par l'unité de commande électronique (ECU), les moyens d'électrovalve de commande du sélecteur de freinage étant aptes à adopter une première configuration de travail dans laquelle ils permettent l'alimentation en fluide d'une première chambre de commande (141A) du sélecteur de freinage (140) pour commander ce dernier dans une position d'isolement (II) dans laquelle l'entrée (140A) et la sortie (140B) du sélecteur de freinage (140) sont isolées par le sélecteur de freinage, une deuxième configuration de travail dans laquelle ils permettent l'alimentation en fluide d'une deuxième chambre de commande (141B) du sélecteur de freinage (140) pour commander ce dernier dans ladite position de liaison (I), et une configuration neutre dans laquelle aucune des deux chambres de commande (141A, 141B) du sélecteur de freinage (140) n'est alimentée en fluide et dans laquelle l'entrée (140A) du sélecteur de freinage est reliée à l'alimentation en fluide (50'), **en ce qu'**il comprend des moyens pour maintenir le sélecteur de freinage en position lorsque les moyens d'électrovalve de commande (142, 144 ; 150) passent de leur première ou de leur deuxième configuration de travail à leur configuration neutre, **en ce que** la conduite de liaison (145) est reliée à des moyens de valve de liaison (122 ; 122, 82) eux-mêmes reliés à la conduite de frein (60) de manière à permettre l'alimentation en fluide de cette conduite de frein ou sa liaison au réservoir (R) selon que la conduite de liaison (145) est reliée à l'alimentation en fluide (50') ou à l'enceinte sans surpression (R'), et **en ce qu'**il comprend des moyens pour fournir à l'unité de commande électronique (ECU) une information (IS) indiquant si le frein de la remorque est d'un premier type nécessitant un défreinage par une alimentation en fluide ou d'un deuxième type, l'unité de commande prenant cette information en compte pour la commande des moyens d'électrovalve de commande du sélecteur de freinage.

9. Dispositif selon les revendications 7 et 8, **caractérisé en ce que** les moyens de valve de liaison comprennent le réducteur de pression proportionnel à commande hydraulique (82) et **en ce que** la conduite de liaison (145) est reliée à une conduite de pilotage (85) dudit réducteur de pression.

10. Dispositif selon la revendication 9, **caractérisé en ce que** la conduite de pilotage (85) est reliée à la conduite de liaison (145) et à une conduite de commande (87) raccordée à l'électrovalve pilote proportionnelle (86) par des moyens (122) de sélection de la plus haute pression.

11. Dispositif selon l'une quelconque des revendications 8 à 10, **caractérisé en ce que**, dans les première et deuxième configurations de travail des moyens d'électrovalve de commande (142, 144 ; 150), les première et deuxième chambres de commande (141A, 141B) du sélecteur hydraulique de freinage (140) sont respectivement reliées à une source auxiliaire de fluide sous pression (50').

12. Dispositif selon les revendications 9 et 11 ou les revendications 9, 10 et 11, **caractérisé en ce que** l'entrée (140A) du sélecter hydraulique de freinage (140) est reliée à ladite enceinte sans surpression (R') au moins lorsque les moyens d'électrovalve de commande (142, 144 ; 150) sont dans leur deuxième configuration de travail.

13. Dispositif selon l'une quelconque des revendications 8 à 12, **caractérisé en ce que** le sélecteur hydraulique de freinage (140) comprend une voie auxiliaire (140C) qui est reliée à l'enceinte sans surpression (R') et **en ce que**, dans la position d'isolement (II) de ce sélecteur, la sortie (140B) dudit sélecteur (140) est reliée à la voie auxiliaire (140C) en étant isolée de l'entrée (140A) tandis que, dans la position de liaison (I) du sélecteur, l'entrée et la sortie (140A, 140B) sont reliées en étant isolées de la voie auxiliaire (140C).

14. Dispositif selon l'une quelconque des revendications 8 à 13, **caractérisé en ce que**, dans la configuration neutre des moyens d'électrovalve de commande (142, 144 ; 150), les deux chambres de commande (141A, 141B) du sélecteur hydraulique de freinage (140) sont mises sensiblement à la même pression.

15. Dispositif selon l'une quelconque des revendications 8 à 14, **caractérisé en ce que** les moyens d'électrovalve de commande comprennent deux électrovalves (142, 144) à deux positions.

16. Dispositif selon l'une quelconque des revendications 8 à 14, **caractérisé en ce que** les moyens d'électrovalve de commande comprennent une électrovalve (150) susceptible d'occuper trois positions.

## Claims

1. A device for controlling hydraulic braking of a trailer hitched to a tractor, which device comprises a hydraulic circuit having a brake pipe (60) suitable for being connected to a pressurized fluid source (50) or to a pressure-free reservoir (R), i.e. a reservoir without excess pressure, via a proportional pressure reducer (62; 82) controlled by control means comprising an electronic control unit (ECU);
said device being **characterized in that** the circuit includes link solenoid-valve means (64) suitable for connecting the proportional pressure reducer (62; 82) to the reservoir (R) or, via a calibrated pressure reducer (66), to the pressurized fluid source (50).

2. A device according to claim 1, **characterized in that** a pressure limiter (68) is disposed on a link between the calibrated pressure reducer (66) and the link solenoid-valve means (64).

3. A device according to claim 1 or claim 2, **characterized in that** the link solenoid-valve means (64) have a first port (64A) connected to a first port (62A; 82A) of the proportional pressure reducer (62; 82), a second port (64B) connected to the reservoir (R), and a third port (64C) connected to an auxiliary pipe (65) suitable for being connected to the fluid source (50) or to the reservoir (R) via the calibrated pressure reducer (66), the link solenoid-valve means (64) being suitable for being caused to interconnect said first and second ports or said first and third ports.

4. A device according to claim 3, **characterized in that** the proportional pressure reducer (62; 82) has a second port (62B; 82B) connected to the pressurized fluid source (50) and a third port (62C; 82C) connected to the brake pipe (60), and **in that** the calibrated pressure reducer (66) has a first port (66A) connected to the reservoir (R), a second port (66B) connected to the pressurized fluid source (50), and a third port (66C) connected to the auxiliary pipe (65).

5. A device according to claim 2, and to any one of claims 1 to 4, **characterized in that** the pressure limiter (68) is disposed on a branch (67) of the auxiliary pipe (65).

6. A device according to any one of claims 1 to 5, **characterized in that** the proportional pressure reducer (62) is a solenoid valve, controlled by the electronic control unit (ECU).

7. A device according to any one of claims 1 to 5, **characterized in that** the proportional pressure reducer (82) is a hydraulically controlled valve including a control chamber (84) suitable for being connected to a control fluid feed via a proportional pilot solenoid valve (86), itself controlled by the electronic control unit (ECU).

8. A device according to any one of claims 1 to 7, **characterized in that** the circuit includes a hydraulic brake selector valve (140) that, when in a link position (I) in which the inlet (140A) and the outlet (140B) of the brake selector valve are interconnected, is suitable for causing a link pipe (145) to be connected to a fluid feed (50') or to a pressure-free enclosure (R'), i.e. to an enclosure without excess pressure, and control solenoid-valve means (142, 144; 150) for controlling the brake selector valve, which means are controlled by the electronic control unit (ECU), the control solenoid-valve means for controlling the brake selector valve being suitable for taking up a first working configuration in which they make it possible to feed a first control chamber (141A) of the brake selector valve (140) with fluid so as to cause it to go into an isolation position (II) in which the inlet (140A) and the outlet (140B) of the brake selector valve (140) are isolated from each other by the brake selector valve, a second working configuration in which they make it possible for a second control chamber (141B) of the brake selector valve (140) to be fed with fluid so as to cause it to go into said link position (I), and a neutral configuration in which neither of the two control chambers (141A, 141B) of the brake selector valve (140) is fed with fluid, and in which the inlet (140A) of the brake selector valve is connected to the fluid feed (50'); **in that** the device includes means for holding the brake selector valve in position when the control solenoid-valve means (142, 144; 150) go from their first working configuration or from their second working configuration to their neutral configuration; **in that** the link pipe (145) is connected to link valve means (122; 122, 82) themselves connected to the brake pipe (60) so as to enable said brake pipe to be fed with fluid or to be connected to the reservoir (R) depending on whether the link pipe (145) is connected to the fluid feed (50') or to the pressure-free enclosure (R'); and **in that** the device includes means for delivering to the electronic control unit (ECU) information (IS) indicating whether the brake of the trailer is of a first type requiring brake release by fluid feed, or of a second type, the control unit taking that information into account in controlling the control solenoid-valve means for controlling the brake selector valve.

9. A device according to claims 7 and 8, **characterized in that** the link valve means include the hydraulically controlled proportional pressure reducer (82), and **in that** the link pipe (145) is connected to a pilot pipe (85) for piloting said pressure reducer.

10. A device according to claim 9, **characterized in that** the pilot pipe (85) is connected to the link pipe (145) and to a control pipe (87) connected to the proportional pilot solenoid valve (86) via selector valve means (122) for selecting the higher pressure.

11. A device according to any one of claims 8 to 10, **characterized in that**, when the control solenoid-valve means (142, 144; 150) are in the first and second working configurations, the first and second control chambers (141A, 141B) of the hydraulic brake selector valve (140) are respectively connected to an auxiliary pressurized fluid source (50').

12. A device according to claims 9 and 11 or to claims 9, 10 and 11, **characterized in that** the inlet (140A) of the hydraulic brake selector valve (140) is connected to said pressure-free enclosure (R') at least when the control solenoid-valve means (142, 144; 150) are in their second working configuration.

13. A device according to any one of claims 8 to 12, **characterized in that** the hydraulic brake selector valve (140) is provided with an auxiliary port (140C) that is connected to the pressure-free enclosure (R'), and **in that** when said selector valve is in the isolation position (II), the outlet (140B) of said selector valve (140) is connected to the auxiliary port (140C) while being isolated from the inlet (140A), whereas, when the selector valve is in the link position (I), the inlet and the outlet (140A, 140B) are interconnected while being isolated from the auxiliary port (140C).

14. A device according to any one of claims 8 to 13, **characterized in that**, when the control solenoid-valve means (142, 144; 150) are in the neutral configuration, the two control chambers (141A, 141B) of the hydraulic brake selector valve (140) are substantially at the same pressure.

15. A device according to any one of claims 8 to 14, **characterized in that** the control solenoid-valve means comprise two two-position solenoid valves (142, 144).

16. A device according to any one of claims 8 to 14, **characterized in that** the control solenoid-valve means comprise one solenoid valve (150) suitable for taking up three positions.

## Patentansprüche

1. Vorrichtung zur Steuerung der Hydraulikbremse eines an eine Zugmaschine angehängten Anhängers, umfassend eine Hydraulikschaltung mit einer Bremsleitung (60), die mit einer Druckfluidquelle (50) oder einem Behälter ohne Überdruck (R) mit Hilfe eines Proportionaldruckreduzierers (62; 82) verbunden ist, der von Steuermitteln, umfassend eine elektronische Steuereinheit (ECU) gesteuert wird,
**dadurch gekennzeichnet, daß** die Schaltung Verbindungsmagnetventilmittel (64) umfaßt, die den Proportionaldruckreduzierer (62; 82) mit dem Behälter (R) oder mit Hilfe eines tarierten Druckreduzierers (66) mit der Druckfluidquelle (50) verbinden können.

2. Vorrichtung nach Anspruch 1, **dadurch gekennzeichnet, daß** ein Druckbegrenzer (68) auf einer Verbindung zwischen dem tarierten Druckreduzierer (66) und den Verbindungsmagnetventilmitteln (64) angeordnet ist.

3. Vorrichtung nach Anspruch 1 oder 2, **dadurch gekennzeichnet, daß** die Verbindungsmagnetventilmittel (64) einen ersten Weg (64A), der mit einem ersten Weg (62A, 82A) des Proportionaldruckreduzierers (62; 82) verbunden ist, einen zweiten Weg (64B), der mit dem Behälter (R) verbunden ist, und einen dritten Weg (64C) aufweisen, der mit einer Hilfsleitung (65) verbunden ist, die mit der Fluidquelle (50) oder dem Behälter (R) mit Hilfe des tarierten Druckreduzierers (66) verbunden werden kann, wobei die Verbindungsmagnetventilmittel (64) derart gesteuert werden können, daß sie den ersten und den zweiten Weg oder den ersten und den dritten Weg verbinden.

4. Vorrichtung nach Anspruch 3, **dadurch gekennzeichnet, daß** der Proportionaldruckreduzierer (62; 82) einen zweiten Weg (62B; 82B), der mit der Druckfluidquelle (50) verbunden ist, und einen dritten Weg (62C; 82C) aufweist, der mit der Bremsleitung (60) verbunden ist, und daß der tarierte Druckreduzierer (66) einen ersten Weg (66A), der mit dem Behälter (R) verbunden ist, einen zweiten Weg (66B), der mit der Druckfluidquelle (50) verbunden ist, und einen dritten Weg (66C) aufweist, der mit der Hilfsleitung (65) verbunden ist.

5. Vorrichtung nach Anspruch 2 und einem der Ansprüche 1 bis 4, **dadurch gekennzeichnet, daß** der Druckreduzierer (68) auf einer Verzweigung (67) der Hilfsleitung (65) angeordnet ist.

6. Vorrichtung nach einem der Ansprüche 1 bis 5, **dadurch gekennzeichnet, daß** der Proportionaldruckreduzierer (62) ein Magnetventil ist, das von der elektronischen Steuereinheit (ECU) gesteuert wird.

7. Vorrichtung nach einem der Ansprüche 1 bis 5, **dadurch gekennzeichnet, daß** der Proportionaldruckreduzierer (82) ein hydraulisch gesteuertes Ventil ist, umfassend eine Steuerkammer (84), die mit einer Steuerfluidversorgung über ein Proportionalkontrollmagnetventil (86) verbunden werden kann, das selbst von der elektronischen Steuereinheit (ECU) gesteuert wird.

8. Vorrichtung nach einem der Ansprüche 1 bis 7, **dadurch gekennzeichnet, daß** die Schaltung einen hydraulischen Bremsschalter (140) umfaßt, der in einer Verbindungsposition (I), in der der Eingang (140A) und der Ausgang (140B) des Bremsschalters verbunden sind, den Anschluß einer Verbindungsleitung (145) mit einer Fluidversorgung (50') oder mit einem Raum ohne Überdruck (R') hervorrufen kann, und Magnetventilmittel (142, 144; 150) zur Steuerung dieses Bremsschalters umfaßt, die von der elektronischen Steuereinheit (ECU) gesteuert werden, wobei die Magnetventilmittel zur Steuerung des Bremsschalters eine erste Arbeitskonfiguration, in der sie die Fluidversorgung einer ersten Steuerkammer (141A) des Bremsschalters (140) ermöglichen, um diesen letztgenannten in eine Trennposition (II) zu steuern, in der der Eingang (140A) und der Ausgang (140B) des Bremsschalters (140) durch den Bremsschalter getrennt sind, eine zweite Arbeitskonfiguration, in der sie die Fluidversorgung einer zweiten Steuerkammer (141 B) des Bremsschalters (140) ermöglichen, um diesen letztgenannten in die Verbindungsposition (I) zu steuern, und eine neutrale Konfiguration einnehmen können, in der keine der beiden Steuerkammern (141A, 141B) des Bremsschalters (140) mit Fluid versorgt wird, und in der der Eingang (140A) des Bremsschalters mit der Fluidversorgung (50') verbunden ist, daß sie Mittel umfaßt, um den Bremsschalter in Position zu halten, wenn die Magnetventilsteuermittel (142, 144; 150) von ihrer ersten oder ihrer zweiten Arbeitskonfiguration in ihre neutrale Konfiguration übergehen, daß die Verbindungsleitung (145) mit Verbindungsventilmitteln (122; 122, 82) verbunden ist, die selbst mit der Bremsleitung (60) verbunden sind, um die Fluidversorgung dieser Bremsleitung oder ihre Verbindung mit dem Behälter (R) zu ermöglichen, je nachdem, ob die Verbindungsleitung (145) mit der Fluidversorgung (50') oder mit dem Raum ohne Überdruck (R') verbunden ist, und daß sie Mittel umfaßt, um an die elektronische Steuereinheit (ECU) eine Information (IS) zu liefern, die anzeigt, ob die Bremse des Anhängers von einem ersten Typ, der ein Lösen der Bremse durch eine Fluidversorgung erfordert, oder von einem zweiten Typ ist, wobei die Steuereinheit diese Information für die Steuerung der Magnetventilmittel zur Steuerung des Bremsschalters berücksichtigt.

9. Vorrichtung nach den Ansprüchen 7 und 8, **dadurch gekennzeichnet, daß** die Verbindungsventilmittel einen Proportionaldruckreduzierer mit hydraulischer Steuerung (82) umfassen und daß die Verbindungsleitung (145) mit einer Steuerleitung (85) des Druckreduzierers verbunden ist.

10. Vorrichtung nach Anspruch 9, **dadurch gekennzeichnet, daß** die Steuerleitung (85) mit der Verbindungsleitung (145) und einer Steuerleitung (87) verbunden ist, die an das Proportionalmagnetsteuerventil (86) durch Mittel (122) zur Auswahl des höchsten Drucks angeschlossen ist.

11. Vorrichtung nach einem der Ansprüche 8 bis 10, **dadurch gekennzeichnet, daß** in der ersten und der zweiten Arbeitskonfiguration der Magnetventilsteuermittel (142, 144; 150) die erste und die zweite Steuerkammer (141 A, 141 B) des hydraulischen Bremsschalters (140) jeweils an eine Druckfluidhilfsquelle (50') angeschlossen sind.

12. Vorrichtung nach den Ansprüchen 9 und 11 oder den Ansprüchen 9, 10 und 11, **dadurch gekennzeichnet, daß** der Eingang (140A) des hydraulischen Bremsschalters (140) mit dem Raum ohne Überdruck (R') zumindest dann verbunden ist, wenn sich die Magnetventilsteuermittel (142, 144; 150) in ihrer zweiten Arbeitskonfiguration befinden.

13. Vorrichtung nach einem der Ansprüche 8 bis 12, **dadurch gekennzeichnet, daß** der hydraulische Bremsschalter (140) einen Hilfsweg (140C) umfaßt, der mit dem Raum ohne Überdruck (R') verbunden ist, und daß in der Trennposition (II) dieses Schalters der Ausgang (140B) des Schalters (140) mit dem Hilfsweg (140C) verbunden ist, wobei er vom Eingang (140A) getrennt ist, wobei in der Verbindungsposition (I) des Schalters der Eingang und der Ausgang (140A, 140B) verbunden sind, wobei sie vom Hilfsweg (140C) getrennt sind.

14. Vorrichtung nach einem der Ansprüche 8 bis 13, **dadurch gekennzeichnet, daß** in der neutralen Konfiguration der Magnetventilsteuermittel (142, 144; 150) die beiden Steuerkammern (141A, 141B) des hydraulischen Bremsschalters (140) im wesentlichen auf denselben Druck eingestellt sind.

15. Vorrichtung nach einem der Ansprüche 8 bis 14, **dadurch gekennzeichnet, daß** die Magnetventilsteuermittel zwei Magnetventile (142, 144) mit zwei Stellungen umfassen.

16. Vorrichtung nach einem der Ansprüche 8 bis 14, **dadurch gekennzeichnet, daß** die Magnetventilsteuermittel ein Magnetventil (150) umfassen, das drei Stellungen einnehmen kann.
